Europäisches Patentamt

European Patent Office

Office européen des brevets

(11) Publication number: **0 136 772**
**B1**

# EUROPEAN PATENT SPECIFICATION

(45) Date of publication of patent specification: **10.08.88**

(21) Application number: **84303570.0**

(22) Date of filing: **25.05.84**

(51) Int. Cl.$^4$: **H 01 G 4/22,** H 01 B 3/30, H 01 B 3/20

(54) Impregnating oil for use as the dielectric medium of capacitors.

(30) Priority: **19.08.83 JP 151422/83**

(43) Date of publication of application:
**10.04.85 Bulletin 85/15**

(45) Publication of the grant of the patent:
**10.08.88 Bulletin 88/32**

(84) Designated Contracting States:
**DE FR GB IT NL SE**

(56) References cited:
**GB-A- 788 667**
**US-A-4 317 159**
**US-A-4 449 163**

(73) Proprietor: **KUREHA KAGAKU KOGYO KABUSHIKI KAISHA**
**9-11 Horidome-cho 1-chome Nihonbashi Chuo-ku**
**Tokyo 103 (JP)**

(72) Inventor: **Ito, Akira**
**16-1 Maehara Nishiki-machi**
**Iwaki-shi Fukushima-ken (JP)**
Inventor: **Ueno, Toshishige**
**48-7 Daimae Nishiki-machi**
**Iwaki-shi Fukushima-ken (JP)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

# 0 136 772

**Description**

The present invention relates to an impregnating oil used as a dielectric medium for a capacitor and an oil impregnated capacitor comprising at least two plastic films respectively coated with a vacuum-evaporated metal on one surface thereof (hereinafter referred to as a metallized plastic film capacitor).

A capacitor having an element prepared by placing together at least two films each coated on one surface with a vacuum-evaporated metal (such a film is hereinafter referred to as the metallized film) such that the metallized surface of one of the two metallized films is in contact with the non-metallized surface of the other metallized film, winding the films and impregnating them with an insulating oil, shows excellent self-healing properties with regard to dielectric breakdown and has the merit of the possibility of being available in small size and light weight. However, on the other hand, the demerit of capacitance decrease of such a type of capacitor during use under high voltage owing to the partial degeneration of the metal on the metallized surface of the metallized film has been recognized. Further, in the case of applying higher dielectric stress to the capacitor, capacitance decrease is easily apt to occur, and such a capacitance decrease is more easily caused in the case where the vacuum-evaporated metal is, for instance aluminium.

Although several reasons are considered as the cause of the partial degeneration of the vacuum-evaporated metal on the metallized film, the presence of moisture both in the element of the capacitor and in the insulating oil is one of the causes thereof. Accordingly, in order to prevent capacitance decrease in such a type of capacitor particularly, metallized polypropylene film capacitors (hereinafter referred to as MPP capacitors), methods for removing moisture from the insulating oil and/or the element thereof have been studied. However, because of the difficulty of completely removing the moisture industrially and experimentally, it has been impossible to sufficiently prevent the capacitance decrease of MPP capacitors. It has been impossible to provide a capacitor having an element comprising metallized films impregnated with the impregnating oil that has a practical value.

Further, although trials have been carried out by thickening the metal layer on the metallized film for preventing the capacitance decrease of MPP capacitors, since the self-healing property of MPP capacitors becomes poorer with the thickening of the metal layer thus resulting in spoiling the specific merit of the capacitor provided with an element comprising the metallized films impregnated with impregnating oil, such a method cannot provide any capacitors having an element comprising the metallized films impregnated with impregnating oil of a practical value.

Furthermore, although the capacitance decrease of MPP capacitors is improved to a certain extent by substituting zinc for aluminium, since the zinc layer of the metallized film is inferior in oxidation stability in air to the aluminum metallized film, the zinc metallized film has a demerit of necessitating troublesome treating thereof.

US—A—4317159 discloses an AC metallized film capacitor comprising two contiguously wound aluminized polypropylene films impregnated with a dielectric fluid selected from the group consisting of ester and hydrocarbon dielectric fluids containing 1 to 20% of an isocyanate containing unreacted isocyanate groups as additive to improve AC life, said isocyanate being selected from the group consisting of a $C_{36}$-aliphatic diisocyanate, a polymethylene polyphenyl isocyanate, a diphenylmethane diisocyanate, a diphenylmethane diisocyanate prepolymer, a liquid rincinoleate urethane prepolymer, and a toluene-diisocyanate-free diisocyanate prepolymer.

The present invention has been effected in consideration of the above-mentioned recent situation, and has an objective of providing an impregnating oil for use in preparing MPP capacitors, and also of providing a capacitor having an element comprising metallized films impregnated with impregnating oil.

Accordingly, the present invention provides an impregnating oil for a metallized plastic film capacitor, comprising an electrical insulating oil having no hydroxyl, carboxyl and amino groups and a diisocyanato-compound; wherein the impregnating oil comprises from 0.1 to 10 parts by weight of a diisocyanato-compound selected from tolylene diisocyanate and 4,4' - diisocyanato - 3,3' - dimethyldiphenyl per 100 parts by weight of an insulating oil selected from 1 - ethylphenyl - 2 - phenylethane, 1 - isopropylphenyl - 2 - phenylethane and 1,2 - ditolylethane.

The invention also provides a metallized plastic film capacitor comprising at least two metallized plastic films impregnated with an impregnating oil according to the invention. The impregnating oil of the invention can thus be used as the dielectric medium of a capacitor.

In the case where an insulating oil of the invention is used as the dielectric medium for an MPP capacitor, it is presumed that the minute amount of moisture which still remains on and/or in the element even after vacuum-drying the element under heating is removed by chemical reaction with the isocyanato-groups in the diisocyanato-compound and, as a result, capacitance decrease of the capacitor due to the moisture is effectively prevented.

The impregnation of the oil into the capacitor element typically is carried out under a highly reduced pressure (vacuum). Accordingly, a diisocyanate compound which is not dissipated is used: tolylene - 2,4 - diisocyanate or 4,4' - diisocyanato - 3,3' - dimethyldiphenyl.

The amount of the diisocyanato-compound added to the insulating oil depends on the state of dryness (moisture content) of the element comprising the metallized film, the width of the metallized film and the diisocyanato-compound itself. However, from 0.1 to 10 parts by weight is used per 100 parts by weight of the insulating oil.

2

As a plastic film of the capacitor element according to the present invention, polypropylene film is suitable.

The wound films as an element for the capacitor according to the present invention can have one of the following constructions:

(1) The element consists of at least two metallized films having a non-metallized rough surface, respectivity.

(2) The element consists of at least two metallized films and at least one plastic film, the plastic film being disposed between the two metallized films, the metallized surface being in contact with the rough surface of the plastic film and at least one of the non-metallized surfaces mutually contacted being rough surface.

As stated above, the capacitor having, as the element, aluminium metallized film impregnated with the impregnating oil according to the present invention is effectively prevented against the capacitance decrease thereof and the dielectric characteristics of the capacitor itself do not degenerate.

The following Examples illustrate the present invention.

Example 1

After preparing each element for a capacitor of a capacitance of 1 µF by winding two aluminium metallized polypropylene films, each 15 µm thick and 100 mm wide with a margin 5 mm wide at either edge of the films, the elements were dried for 3 days at 80°C under a reduced pressure of 0.01 mmHg.

An impregnating oil prepared by mixing 2 parts by weight of each of the isocyanato-compounds shown in Table 1 and 100 parts by weight of 1 - isopropylphenyl - 2 - phenylethane was impregnated into each of the thus prepared and dried elements to obtain capacitors. In addition, as a comparative specimen, a capacitor was prepared by impregnating only 1 - isopropylphenyl - 2 - phenylethane into the same designed element.

To each of the thus prepared capacitors, an alternating current of 1200 V was applied. By measuring the time for which the voltage was applied before the capacitance showed a reduction of 0.5% from its initial value, the effect of the prevention of each capacitor against capacitance reduction was judged. The results are shown in Table 1.

TABLE 1

| | Isocyanato-compound | Time for which alternating voltage was applied (hours) |
|---|---|---|
| Present invention A | 4,4'-diisocyanato-3,3'-dimethyldiphenyl | >1500 |
| B | tolylene diisocyanate | >1500 |
| Comparative specimen a | none | 150 |

Example 2

Six kinds of wound films as the element for a capacitor of a capacitance of 2 µF were prepared while using the elements as seen from Table 2. Namely, in the order, for instance, from top to bottom of metallized film/non-metallized film/metallized film/non-metallized film.

In Table 2, those classified as A (A-1, A-2 and A-3) are the wound films according to the present invention satisfying the following two conditions, namely, (1) the metallized surface is in contact with the roughly processed surface of a non-metallized polypropylene film and (2) at least one of the two non-metallized surfaces in mutual contact is roughly processed. On the other hand, in those classified as B (B-1, B-2 and B-3), (1) the metallized surface is in contact with the smooth surface of a non-metallized polypropylene film, or (2) two non-metallized surfaces in mutual contact are smooth.

### TABLE 2
#### Composition of films

| Code No. of element | Metallized polypropylene film | Polypropylene film |
|---|---|---|
| A-1 | one of the two smooth surfaces was metallized with aluminum | both surfaces were roughly processed |
| A-2 | the smooth surface was metallized with aluminum and the other surface was rough | the same with above |
| A-3 | the same as above | one surface was roughly processed |
| B-1 | one of the two smooth surfaces was metallized with aluminum | the same with above |
| B-2 | the same as above | two surfaces were smooth |
| B-3 | the smooth surface was metallized with aluminum and the other surface was rough | the same with above |

The thus prepared six kinds of elements were impregnated with each of the following impregnants.
(a-1) 1-isopropylphenyl-2-phenylethane (1,2-CPE),
(a-2) a mixture of 99.5% by weight of 1,2-CPE and 0.5% by weight of 4,4' - dicyanato - 3,3' - dimethyldiphenyl.

The respective partial discharge properties and the change of capacitance with the lapse of time of the thus obtained capacitors are shown in Tables 3 and 4, the value being the mean value for five capacitors of each group.

As are seen in Tables 3 and 4, the capacitors provided with, as the element thereof, wound films in which (1) the metallized surface of a metallized film is in contact with the roughly processed side of a polypropylene film and (2) at least one of the two non-metallized surfaces in mutual contact of which one belongs to one plastic film and the other of which belongs to another plastic film is roughly processed and which is impregnated with an insulating oil admixed with a diicocyanato-compound employed according to the present invention are superior in the partial discharge property and substantially does not show the capacitance decrease thereof after a long term of applying a high voltage.

### TABLE 3
#### Partial discharge stress

Unit: V/μm

| Code of wound film | (element) | Partial discharge stress | | | | | |
|---|---|---|---|---|---|---|---|
| | | A-1 | A-2 | A-3 | B-1 | B-2 | B-3 |
| Impregnated oil 1,2-CPE plus isocyanato-compound[1] | DIS[2] | 158 | 158 | 159 | 135 | 130 | 135 |
| | DES[3] | 113 | 114 | 114 | 47 | 46 | 45 |
| 1,2-CPE alone | DIS | 158 | 158 | 159 | 135 | 130 | 135 |
| | DES | 113 | 114 | 114 | 47 | 46 | 45 |

Notes: [1] 4,4'-diisocyanato-3,3'-dimethyldiphenyl;
[2] Partial discharge inception stress;
[3] Partial discharge exception stress.

TABLE 4
Change of capacitance of capacitors with time
shown by percentage of the survival capacitance

Unit:% of initial
capacitance

| Impregnated oil | Elements | | | | | |
|---|---|---|---|---|---|---|
| | A-1 | A-2 | A-3 | B-1 | B-2 | B-3 |
| 1,2-CPE plus isocyanato-compound[1] | 100 | 100 | 100 | 100 | 77 | 83 |
| 1,2-CPE alone[2] | 87 | 86 | 87 | 86 | 85 | 86 |

Notes:   Data under the conditions of: at 40°C of ambient temperature and under 80 V/μm of the electric field,
[1] After 2000 hours of applying, the capacitor impregnated with a mixture of each indicated insulating oil and 4,4' - diisocyanato - 3,3' - dimethyldiphenyl.
[2] After 200 hours of applying, the capacitor impregnated with each indicated insulating oil alone.

**Claims**

1. An impregnating oil for a metallized plastic film capacitor, comprising an electrical insulating oil having no hydroxyl, carboxyl and amino groups and a diisocyanato-compound; wherein the impregnating oil comprises from 0.1 to 10 parts by weight of a diisocyanato-compound selected from tolylene diisocyanate and 4,4' - diisocyanato - 3,3' - dimethyldiphenyl per 100 parts by weight of an insulating oil selected from 1 - ethylphenyl - 2 - phenylethane, 1 - isopropylphenyl - 2 - phenylethane and 1,2 - ditolylethane.

2. A metallized plastic film capacitor comprising at least two metallized plastics films impregnated with an impregnating oil as claimed in claim 1.

3. A capacitor according to claim 2 wherein the metallized plastic films are metallized polypropylene films.

4. Use of an impregnating oil as claimed in claim 1 as the dielectric medium of a capacitor.

**Patentansprüche**

1. Imprägnieröl für einen Kondensator mit metallisierter Kunststoffolie, enthaltend ein elektrisch isolierendes Öl ohne Hydroxyl-, Carboxyl- und Aminogruppen und eine Diisocyanatverbindung, wobei das Imprägnieröl 0,1 bis 1,0 Gew.-Teile einer Diisocyanatverbindung, die aus Tolylendiisocyanat und 4,4' - Diisocyanat - 3,3' - dimethyldiphenyl ausgewählt ist, pro 100 Gew.-Teile eines isolierenden Öls, das aus 1 - Ethylphenyl - 2 - phenylethan, 1 - Isopropylphenyl - 2 - phenylethan und 1,2 - Ditolylethan ausgewählt ist, umfaßt.

2. Kondensator mit metallisierter Kunststoffolie, mit mindestens zwei metallisierten Kunststoffolien, die mit einem Imprägnieröl nach Anspruch 1 imprägniert sind.

3. Kondensator nach Anspruch 2, worin die metallisierten Kunststoffolien metallisierte Polypropylenfolien sind.

4. Verwendung des Imprägnieröls nach Anspruch 1 als dielektrisches Medium für einen Kondensator.

**Revendications**

1. Huile d'imprégnation pour un condensateur à film plastique métallisé, comprenant une huile isolante électrique n'ayant aucun groupe hydroxy, carboxy et amino et un composé diisocyanate, caractérisé en ce que l'huile d'imprégnation comprend de 0,1 à 10 parties en poids d'un composé diisocyanate choisi parmi le tolylène diisocyanate et le 4,4' - diisocyanato - 3,3' - diméthyl - diphényle pour 100 parties en poids d'une huile isolante choisie parmi le 1 - éthylphényl - 2 - phényléthane, le 1 - isopropylphényl - 2 - phényléthane et le 1,2 - ditolyléthane.

2. Condensateur à films plastiques métallisés, comprenant au moins deux films plastiques métallisés imprégnés avec une huile d'imprégnation suivant la revendication 1.

3. Condensateur suivant la revendication 2, caractérisé en ce que les films plastiques métallisés sont des films de polypropylène métallisés.

4. Utilisation d'une huile d'imprégnation suivant la revendication 1, en tant que milieu diélectrique d'un condensateur.